# EUROPEAN PATENT APPLICATION

(11) **EP 4 818 254 A1**
(43) Date of publication of application: **07.10.2026**
(21) Application number: 25305474.6
(22) Date of filing: 31.03.2025
(51) Int. Cl.: C08L 23/14

(54) **THERMOPLASTIC ELASTOMER COMPOSITION, AIRBAG HOUSING COVER AND MANUFACTURING METHODS THEREOF**

(71) Applicant: MCPP Innovation LLC, Tokyo 100-8251 (JP)
(72) Inventor: MIZUNO, Tadashi, 85130 Tiffauges (FR); FORTANNIER, Alexandre, 85130 Tiffauges (FR)
(74) Representative: Vossius & Partner Patentanwälte Rechtsanwälte mbB

(57) **Abstract**

A thermoplastic elastomer composition comprising a propylene-based random copolymer, a linear styrene-based elastomer having a styrene unit content of 20% by mass or more and 35% by mass or less and a glass transition temperature in the range of -65°C or higher and -45°C or lower, and silica and/or an amide lubricant, wherein a total content of the propylene-based random copolymer and the linear styrene-based elastomer is more than 85% by mass with respect to 100% by mass of the thermoplastic elastomer composition, and the content of the linear styrene-based elastomer relative to 100 parts by mass of the propylene-based random copolymer is 45 parts by mass or more and 250 parts by mass or less, wherein the thermoplastic elastomer composition has a melt flow rate of 1.0g/10min or more and 50g/10min or less at a temperature of 230°C and a measurement load of 21.18N according to JIS K7210 (1999), and wherein the content of the silica relative to 100 parts by mass of the total content of the propylene-based random copolymer and the linear styrene-based elastomer is 0.00090 parts by mass or more and 0.90 parts by mass or less and/or the content of the amide lubricant relative to 100 parts by mass of the total content of the propylene-based random copolymer and the linear styrene-based elastomer is 0.0050 parts by mass or more and 0.60 parts by mass or less.

## Description

### Technical Field

The present invention relates to an airbag housing cover excellent in appearance quality, a method for producing the same, and a thermoplastic elastomer composition capable of providing such an airbag housing cover.

The thermoplastic elastomer composition of the present invention is excellent in light transmittance and/or discoloration resistance and can provide an airbag housing cover excellent in appearance quality. Furthermore, change in melt fluidity of the thermoplastic elastomer composition of the present invention during kneading over time is small. Thus, the thermoplastic elastomer composition of the present invention can stably provide an airbag housing cover with excellent appearance quality.

### Background Art

An automotive airbag system is a system that protects a driver and a passenger in the event of a car collision, and consists of a device for detecting an impact of a collision and an airbag device. An airbag device is installed, for example, in a steering wheel, an instrument panel in front of a front passenger seat, a driver's seat and a front passenger seat, front and side pillars.

When an airbag of an airbag device is inflated, an airbag housing cover of the airbag device has a possibility that that the cover is destroyed and broken pieces thereof scatter, or a possibility that the cover will scatter due to destruction of a cover mounting portion of the airbag device. For this reason, various proposals have been made regarding the structure and material for the purpose of preventing the cover from being abnormally destroyed and scattered.

In the case where a deployment output of an airbag device is increased, an airbag housing cover thereof has a possibility that it is damaged during deploying at a low or high temperature. Therefore, from the viewpoints of enhanced safety and freedom of design, there is a demand for developing a material of a thermoplastic elastomer composition having a high low-temperature impact resistance and a high high-temperature strength.

As such a thermoplastic elastomer composition for an airbag housing cover, a thermoplastic elastomer composition comprising a propylene-based resin as a hard segment and an olefin-based rubber such as ethylene-propylene elastomer (EPDM, EPR, etc.) or a styrene-based elastomer as a soft segment are known (PTL1 and PTL2).
PTL 1: JP 2019-38925 A
PTL 2: JP 2020-158615 A
PTL3: WO2023/276883A
In recent years, there is a design that incorporates a function as a touch panel display into a part of an airbag housing cover. This type of airbag housing cover is composed of a surface layer made of a film that serves as an interface for a touch panel display, and an airbag housing cover layer provided so as to be in contact with the surface layer. A lightable switch is embedded inside the airbag housing cover. In such a configuration, the airbag housing cover needs to be made of a material that transmits light so that a user can easily see the lighting of the switch. Therefore, it has become necessary that the thermoplastic elastomer composition used for the airbag housing cover layer shows light transmittance to the extent that the user can visually recognize the lighting of the switch, in addition to the low-temperature impact resistance and the high-temperature strength that are conventionally required.

According to detailed studies by the present inventors, the thermoplastic elastomer composition used in the airbag described in PTL 1 and PTL 2 has good low-temperature impact resistance and high-temperature strength, but does not intend to have light transmittance as described above. A thermoplastic elastomer composition disclosed in PTL3 aims to provide an airbag housing cover excellent in low-temperature impact resistance, high-temperature strength and light transmittance. However, in terms of an optimum balance of processability and light transmittance, there is still room for optimization of these compositions. Further, while there are demands for improvement of the appearance quality of a thermoplastic elastomer composition for an airbag housing cover, there has been no sufficient study on discoloration resistance of a thermoplastic elastomer composition. Even more, in order to ensure efficiency and stability of production of an airbag housing cover having an excellent appearance quality, there are demands for a thermoplastic elastomer composition whose melt fluidity is stable during kneading.

### Summary of Invention

The present invention has been made in view of the problems of the prior art as described above.

An object of the present invention is to provide an airbag housing cover excellent in appearance quality, a thermoplastic elastomer composition which can be stably prepared and processed to provide such an airbag housing cover, and production methods thereof. The thermoplastic elastomer of the present invention is excellent in light transmittance and/or discoloration resistance and can provide an airbag housing cover excellent in appearance quality.

### Solution to Problem

The present inventors have found that a thermoplastic elastomer composition containing a propylene-based random copolymer, a specific linear styrene-based elastomer and silica is excellent in discoloration resistance and can be stably processed. Moreover, the inventors have found that such a thermoplastic elastomer composition containing an amide lubricant in addition to or as an alternative to the silica provides not only a good processability, but further ensures excellent light transmittance for the thermoplastic elastomer composition containing the lubricant. Thus, using the compositions in accordance with the invention, it is possible to stably provide an airbag housing cover excellent in appearance quality, and the present invention could be completed accordingly.

Specifically, a summary of the present invention lies in the following [1] to [9].
[1] A thermoplastic elastomer composition comprising a propylene-based random copolymer, a linear styrene-based elastomer having a styrene unit content of 20% by mass or more and 35% by mass or less and a glass transition temperature in the range of -65°C or higher and -45°C or lower, and silica, wherein a total content of the propylene-based random copolymer and the linear styrene-based elastomer is more than 85% by mass with respect to 100% by mass of the thermoplastic elastomer composition, and the content of the linear styrene-based elastomer relative to 100 parts by mass of the propylene-based random copolymer is 45 parts by mass or more and 250 parts by mass or less, wherein the thermoplastic elastomer composition has a melt flow rate of 1.0g/10min or more and 50g/10min or less at a temperature of 230°C and a measurement load of 21.18N according to JIS K7210 (1999), and wherein the content of the silica relative to 100 parts by mass of the total content of the propylene-based random copolymer and the linear styrene-based elastomer is 0.00090 parts by mass or more and 0.90 parts by mass or less.
[2] The thermoplastic elastomer composition according to [1], wherein the silica is at least one selected from the group consisting of fumed silica and precipitated silica.
[3] The thermoplastic elastomer composition according to [1] or [2], wherein the thermoplastic elastomer composition further comprises an amide lubricant wherein the content of the amide lubricant relative to 100 parts by mass of the total content of the propylene-based random copolymer and the linear styrene-based elastomer is 0.0050 parts by mass or more and 0.60 parts by mass or less.
[4] A thermoplastic elastomer composition comprising a propylene-based random copolymer, a linear styrene-based elastomer having a styrene unit content of 20% by mass or more and 35% by mass or less and a glass transition temperature in the range of -65°C or higher and -45°C or lower, and an amide lubricant wherein a total content of the propylene-based random copolymer and the linear styrene-based elastomer is more than 85% by mass with respect to 100% by mass of the thermoplastic elastomer composition, and the content of the linear styrene-based elastomer relative to 100 parts by mass of the propylene-based random copolymer is 45 parts by mass or more and 250 parts by mass or less, wherein the thermoplastic elastomer composition has a melt flow rate of 1.0g/10min or more and 50g/10min or less at a temperature of 230°C and a measurement load of 21.18N according to JIS K7210 (1999) and wherein the content of the amide lubricant relative to 100 parts by mass of the total content of the propylene-based random copolymer and the linear styrene-based elastomer is 0.0050 parts by mass or more and 0.60 parts by mass or less.
[5] The thermoplastic elastomer composition according to any one of [1] to [4], wherein the linear styrene-based elastomer has a styrene unit content of 20% by mass or more and 25% by mass or less.
[6] The thermoplastic elastomer composition according to any one of [1] to [5], wherein the linear styrene-based elastomer consists of a hydrogenated product of a styrene/conjugated diene block copolymer (B-1) having a styrene unit content of 25% by mass or more and 35% by mass or less, and a hydrogenated product of a styrene/conjugated diene block copolymer (B-2) having a styrene unit content of 10% by mass or more and 15% by mass or less.
[7] An airbag housing cover formed by the thermoplastic elastomer composition according to any one of [1] to [6].
[8] A method for manufacturing the thermoplastic elastomer composition according to any one of [1] to [6], comprising a step of melt-kneading the propylene-based random copolymer, the linear styrene-based elastomer, the silica and/or the amide lubricant at a temperature of 155°C or higher and 240°C or lower.
[9] A method for manufacturing the airbag housing cover according to [7], comprising a step of injection molding the thermoplastic elastomer composition.

### Advantageous Effects of Invention

The thermoplastic elastomer composition of the present invention is excellent in light transmittance and/or discoloration resistance. Therefore, according to the thermoplastic elastomer composition of the present invention, it is possible to obtain an airbag housing cover excellent in appearance quality.

The thermoplastic elastomer composition of the present invention which can provide excellent light transmittance and/or discoloration resistance can improve appearance quality of an airbag housing cover. Thus, the degree of freedom in design of an airbag housing cover is increased. Furthermore, by using the thermoplastic elastomer composition whose change in melt fluidity during kneading over time is small, an airbag housing cover which is excellent in appearance quality can be stably provided.

Examples of the airbag housing cover of the present invention include a driver airbag housing cover, a front passenger airbag housing cover, a pedestrian airbag housing cover, a knee airbag housing cover, a side airbag housing cover, and a curtain airbag housing cover. It can be suitably used for any of airbag housing covers.

In particular, the airbag housing cover of the present invention is suitable as an airbag housing incorporating a touch panel display due to its excellent transparency.

### Description of Embodiments

The present invention will be described in detail below. The present invention is not limited to the following description and can be modified and practiced in any manner that is consistent with the scope of the present invention.

### [Thermoplastic Elastomer Composition]

First, the thermoplastic elastomer composition according to the present invention will be explained.

The thermoplastic elastomer composition of the present invention is a thermoplastic elastomer composition comprising a propylene-based random copolymer, a linear styrene-based elastomer having a styrene unit content of 20% by mass or more and 35% by mass or less and a glass transition temperature in the range of -65°C or higher and -45°C or lower, and silica and/or an amide lubricant, wherein a total content of the propylene-based random copolymer and the linear styrene-based elastomer is more than 85% by mass with respect to 100% by mass of the thermoplastic elastomer composition, and the content of the linear styrene-based elastomer relative to 100 parts by mass of the propylene-based random copolymer is 45 parts by mass or more and 250 parts by mass or less, and the thermoplastic elastomer composition has a melt flow rate of 1.0g/10min or more and 50g/10min or less at a temperature of 230°C and a measurement load of 21.18N according to JIS K7210 (1999) and the content of the silica relative to 100 parts by mass of the total content of the propylene-based random copolymer and the linear styrene-based elastomer is 0.00090 parts by mass or more and 0.90 parts by mass or less and/or the content of the amide lubricant relative to 100 parts by mass of the total content of the propylene-based random copolymer and the linear styrene-based elastomer is 0.0050 parts by mass or more and 0.60 parts by mass or less.

### <Mechanism>

The thermoplastic elastomer composition of the present invention is excellent in light transmittance and/or discoloration resistance.

Although the details of why the thermoplastic elastomer composition of the present invention exhibits such effects are not clear, the following is presumed as the reason why such effects are exhibited.

Propylene-based polymers include propylene homopolymers and propylene-based copolymers, and propylene-based copolymers include propylene-based random copolymers and propylene-based block copolymers. Among them, the propylene-based random copolymer provides the thermoplastic elastomer composition that is particularly excellent in light transmission, since the propylene random copolymer has a lower crystallinity.

In addition, it is known that the refractive index of a linear styrene-based elastomer is also correlated with the styrene unit content, and that the higher the styrene unit content, the higher the refractive index. Therefore, by setting the styrene unit content of the linear styrene-based elastomer to a specific range, the refractive index of the propylene-based random copolymer and the refractive index of the linear styrene-based elastomer can be brought close to each other, and the light transmittance can be improved.

In the present invention, a hydrogenated product of a styrene/conjugated diene block copolymer can be specifically used as the linear styrene-based elastomer.

Here, the styrene unit content is the content of styrene units derived from raw material styrene and introduced into the hydrogenated product of the styrene/conjugated diene block copolymer.

Furthermore, low-temperature impact resistance, high-temperature strength, and light transmittance can be achieved at a higher level by using the styrene-based elastomer having a glass transition temperature in the range of -65°C or higher and - 45°C or lower, having a specific styrene unit content, and being a linear styrene-based elastomer as the linear styrene-based elastomer.

Here, when the linear styrene-based elastomer has two or more glass transition temperatures, at least one glass transition temperature is in the range of -65°C or higher and -45°C or lower.

As mentioned above, the linear styrene-based elastomer having a specific styrene unit content improves light transmittance, however, tends to cause aggregation of raw materials of a thermoplastic elastomer composition. Silica, which may be added in a specific amount to the thermoplastic elastomer composition of the present invention, can suppress heat generation during melt-kneading, thereby, may contribute to stable melt fluidity of the thermoplastic elastomer composition. Furthermore, suppression of heat generation during melt-kneading may contribute to suppression of discoloration.

An amide lubricant which may be used in the present invention is compatible with propylene-based copolymers. It has less influence on cloudiness and therefore it is thought that a high level of total light transmittance can be provided.

### <Propylene-based Random Copolymer>

The propylene-based random copolymer used in the thermoplastic elastomer composition of the present invention is a random copolymer with propylene units and other monomers such as ethylene units, α-olefin units other than propylene, and monomer units other than ethylene and α-olefins.

The propylene unit content of the propylene-based random copolymer is usually 50% by mass or more based on the total mass of the propylene-based random copolymer, preferably 85% by mass or more, more preferably 90% by mass or more, still more preferably 94% by mass or more, and the upper limit is preferably 99% by mass or less. When the content of propylene units in the propylene-based random copolymer is equal to or above the above lower limit, heat resistance and rigidity tend to be improved. If the content of propylene units in the propylene-based random copolymer is equal to or less than the above upper limit, the crystallinity is low, so that the obtained thermoplastic elastomer composition has improved light transmittance.

The content of propylene units in the propylene-based random copolymer can be determined by infrared spectroscopy.

Examples of α-olefin units other than propylene contained in the propylene-based random copolymer include α-olefins having 4 or more and 20 or less carbon atoms. Examples of α-olefins having 4 to 20 carbon atoms include 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4- methyl-1-pentene, 2-ethyl-1-hexene, and 2,2,4-trimethyl-1-pentene. Preferred are α-olefins having 4 to 10 carbon atoms, and more preferred are ethylene, 1-butene, 1-hexene and 1-octene.

The propylene-based random copolymer may contain only one type of these α-olefin units and ethylene units, or may contain two or more types.

Specific examples of propylene-based random copolymers include propylene/ethylene random copolymer, propylene/1-butene random copolymer, propylene/1-hexene random copolymer, propylene/1-octene random copolymer, propylene/ethylene/1-butene random copolymer, propylene/ethylene/1-hexene random copolymer, and propylene/ethylene/1-octene random copolymer. A random copolymer of propylene and at least one monomer selected from ethylene and α-olefins having 4 to 10 carbon atoms is preferred.

Among these, from the viewpoint of compatibility between low-temperature impact resistance and high-temperature strength and transparency, a propylene-based random copolymer containing 6% by mass or less, for example 1% by mass or more and 6% by mass or less of one or more monomer units selected from ethylene units, butene units, hexene units, and octene units is preferably suitable.

The melt flow rate (MFR) of the propylene-based random copolymer is not limited, but is usually 0.1 g/min or more, and from the viewpoint of appearance of the molded article it is preferably 10 g/10 min or more, more preferably 20 g/min or more, and still more preferably 25 g/10 min or more. It is usually 200 g/10 min or less, and from the viewpoint of tensile strength, preferably 150 g/10 min or less, and more preferably 100 g/10 min or less. The melt flow rate of a propylene-based random copolymer is measured according to JIS K7210 (1999) under conditions of a measurement temperature of 230°C and a measurement load of 21.18N.

For producing the propylene-based random copolymer, the polymerization methods known in the related art in which a known catalyst for polymerization of olefins is used may be used. For example, a multi-stage polymerization method using a Ziegler-Natta catalyst can be mentioned. As the multi-stage polymerization method, e.g., a slurry polymerization method, a solution polymerization method, a bulk polymerization method, or a gas phase polymerization method can be used, and two or more of these methods may be combined.

The propylene-based random copolymer used in the thermoplastic elastomer composition of the present invention can also be a commercially available product. The propylene-based random copolymer can be procured from the manufacturers listed below, and can be selected as appropriate. Commercially available products include, for example, Prim Polypro (registered trademark) manufactured by Prime Polymer Co., Ltd., Sumitomo Noblen (registered trademark) manufactured by Sumitomo Chemical Co., Ltd., polypropylene random copolymer manufactured by SunAllomer Co., Ltd., Novatec (registered trademark) PP manufactured by Japan Polypropylene Corporation, Moplen (registered trademark) manufactured by Lyondell Basell, ExxonMobil PP manufactured by ExxonMobil, Formolene (registered trademark) manufactured by Formosa Plastics, Borealis PP manufactured by Borealis, SEETEC PP manufactured by LG Chemical, ASI POLYPROPYLENE manufactured by A. Schulman, INEOS PP manufactured by INEOS Olefins & Polymers, Braskem PP manufactured by Braskem, Hanwha Total Petrochemical Random PP manufactured by Hanwha Total, Sabic (registered trademark) PP manufactured by Sabic, TOTAL PETROCHEMICALS Polypropylene manufactured by TOTAL PETROCHEMICALS, YUPLENE (registered trademark) manufactured by SK.

The propylene-based random copolymer comprised by the thermoplastic elastomer composition of the present invention may be only one type of propylene-based random copolymer, or may contain two or more types having different monomer compositions and/or physical properties. It is preferred that only one type of propylene-based random copolymer is used.

### < Linear Styrene-based Elastomer>

The thermoplastic elastomer composition contains a linear styrene-based elastomer having a styrene unit content of 20% by mass or more and 35% by mass or less and a glass transition temperature in the range of -65°C or higher and -45°C or lower.

The linear styrene-based elastomer comprised by the thermoplastic elastomer composition of the present invention may be only one type of linear styrene-based elastomer, or may contain two or more types having different monomer compositions and/or physical properties.

Also, the styrene-based elastomer used in the present invention is a linear styrene-based elastomer. A linear styrene-based elastomer can be easily dispersed in a propylene-based random copolymer and can further improve light transmittance.

Here, the linear styrene-based elastomer is, for example, a hydrogenated product of a styrene/conjugated diene block copolymer in which the conjugated diene portion is butadiene, isoprene, or a mixture thereof. Preferably, the linear styrene-based elastomer is a styrene/ethylene/butylene/styrene copolymer, which is a hydrogenated product of a styrene/butadiene block copolymer.

The linear styrene-based elastomer used in the thermoplastic elastomer composition of the present invention has a glass transition temperature in the range of -65°C or higher and -45°C or lower. A combination of the linear styrene-based elastomer having a glass transition temperature in the range of -65°C or higher and -45°C or lower with a propylene-based random copolymer makes it possible to obtain a thermoplastic elastomer composition which is excellent in light transmittance, low-temperature impact resistance, and high-temperature strength.

From the viewpoint of low-temperature impact resistance, the linear styrene-based elastomer preferably has a glass transition temperature in the range of -65°C or higher and -50°C or lower.

The glass transition temperature of a linear styrene-based elastomer is measured by the DSC method. The glass transition temperature is the intersection point of the tangent line at the inflection point and the base line obtained by DSC. The measurement conditions for obtaining the glass transition temperature are as follows: a 10 mg sample was taken, melted by heating in a DSC from 25 to 200°C at a heating rate of 100°C/min., held at 200°C for one minute, crystallized at a cooling rate of 10°C/min. to -130°C, held at -130°C for 10 minutes, and then heated to 200°C at a heating rate of 10°C/min.

When two or more types of linear styrene-based elastomer are used with two or more glass transition temperatures, at least one glass transition temperature is in the range of -65°C or higher and -45°C or lower, preferably in the range of -65°C or higher and -50°C or lower. The other glass transition temperature(s) may be within or outside the glass transition temperature ranges or preferred ranges described above and are preferably within these ranges or preferred ranges.

The linear styrene-based elastomer used in the present invention has a styrene unit content of 20% by mass or more and 35% by mass or less, based on the total mass of the linear styrene-based elastomer, from the viewpoint of low-temperature impact resistance, high-temperature strength, and light transmittance.

The styrene unit content of the linear styrene-based elastomer is more preferably 21% by mass or more from the viewpoint of strength and heat resistance, and more preferably 30% by mass or less from the viewpoint of flexibility and impact resistance, and even more preferably 28% by mass or less, particularly preferably 25% by mass or less.

The styrene unit content of the linear styrene-based elastomer can be calculated by performing proton NMR measurement with a nuclear magnetic resonance apparatus and quantifying the characteristic groups of styrene.

The styrene unit content of the linear styrene-based elastomer when using two or more types of linear styrene-based elastomers can also be calculated by proportional calculation from the styrene unit content of each linear styrene-based elastomer and the blending mass ratio of each linear styrene-based elastomer in the total mass of linear styrene-based elastomers. Thus, the styrene unit content can be expressed as the ratio of the total mass of styrene units in the total mass of linear styrene-based elastomer(s) contained in the composition in accordance with the invention. In this case, the styrene unit content of each type of linear styrene-based elastomer may be within or outside the preferred range of the styrene unit content described above. It suffices that the total styrene unit content of the linear styrene-based elastomer calculated by proportional calculation is within the defined range or the preferred ranges of the above-described styrene unit content.

For example, when a hydrogenated product of a styrene/conjugated diene block copolymer (B-1) having a styrene unit content of 25% by mass or more and 35% by mass or less, and a hydrogenated product of a styrene/conjugated diene block copolymer (B-2) having a styrene unit content of 10% by mass or more and 15% by mass or less are used in combination as linear styrene-based elastomers, so that the styrene unit content is 20% by mass or more and 35% by mass or less, particularly 20% by mass or more and 25% by mass or less, it becomes easier to achieve both high-temperature strength and low-temperature impact resistance, as well as light transmittance. Preferably the hydrogenated product of the styrene/conjugated diene block copolymer (B-1) and the hydrogenated product of the styrene/conjugated diene block copolymer (B-2) are hydrogenated styrene/conjugated diene/styrene block copolymers, respectively.

A suitable conjugated diene in the hydrogenated product of the styrene/conjugated diene block copolymer as the linear styrene-based elastomer is butadiene, isoprene or a mixture thereof. Examples of hydrogenated styrene/conjugated diene block copolymers include hydrogenated styrene/butadiene block copolymers (hereinafter sometimes simply abbreviated as "SEBS").

By using a hydrogenated product of a styrene/conjugated diene block copolymer as a linear styrene-based elastomer, it is possible to maintain good light resistance of the thermoplastic elastomer composition having high visible light and ultraviolet transmittance better than when a polymer having a double bond in the molecular structure such as styrene-butadiene-styrene block copolymer (SBS) is used as a linear styrene-based elastomer.

In addition, a thermoplastic elastomer composition excellent in low-temperature impact resistance, high-temperature strength, and light transmittance can be obtained by using a combination of the propylene-based random copolymer described above and a hydrogenated product of a styrene/conjugated diene block copolymer having a styrene unit content of 20% by mass or more and 35% by mass or less, particularly 20% by mass or more and 25% by mass or less, and a glass transition temperature in the range of -65°C or higher and -45°C or lower.

The hydrogenated product of the styrene/conjugated diene block copolymer as a preferred linear styrene-based elastomer preferably has a 1,2-microstructure of 60 mol% or less, more preferably 45 mol% or less, as analyzed by the NMR method. Those having a 1,2-microstructure of 60 mol % or less are preferable from the viewpoint of moldability and flexibility. From the viewpoint of weather resistance, the hydrogenation rate of the hydrogenated product of the styrene/conjugated diene block copolymer as the styrene elastomer is preferably 90 mol % or more, more preferably 95 mol % or more.

The weight average molecular weight (Mw) of the linear styrene-based elastomer is preferably 40,000 or more, more preferably 45,000 or more, still more preferably 48,000 or more, from the viewpoint of releasability.

From the viewpoint of transparency, the weight average molecular weight (Mw) of the linear styrene-based elastomer is preferably 120,000 or less, more preferably 110,000 or less, and even more preferably 105,000 or less.

On the other hand, a material with high light transmittance and low transparency makes it possible to produce a molded body that looks like frosted glass. From the viewpoint of such appearance, the lower limit of the mass average molecular weight (Mw) of the linear styrene-based elastomer is preferably 125,000 or more, more preferably 130,000 or more, still more preferably 135,000 or more, and particularly preferably 140,000 or more. In this case, the upper limit of the mass average molecular weight (Mw) is preferably 350,000 or less, more preferably 325,000 or less, even more preferably 300,000 or less, from the viewpoint of melt fluidity. By setting the molecular weight of the linear styrene-based elastomer within the range described above, the light reaching the interior of the molded article can be appropriately scattered, and an appearance like frosted glass can be achieved.

When using two or more types of linear styrene-based elastomer, the weight average molecular weight of the linear styrene-based elastomer can be obtained by measuring a mixture of all linear styrene-based elastomers by the GPC method described below. In this case, the weight average molecular weight of each linear styrene-based elastomer may be within or outside the above-described preferred range of the weight average molecular weight of the linear styrene-based elastomer, so long as a mixture of the linear styrene-based elastomers has the weight average molecular weight of the linear styrene-based elastomer within the preferred range described above.

The weight average molecular weight (Mw) of a linear styrene-based elastomer is measured by gel permeation chromatography method (GPC method), and can be measured, for example, under the following conditions.
Instrument: "HLC-8220 GPC (R)" manufactured by Tosoh Corporation
Column: "TSKgel Super HM-M (6.0 mm I.D×15 cm×2 + G)" manufactured by Tosoh Corporation
Detector: Differential refractive index detector (RI/built-in)
Solvent: chloroform
Temperature: 40°C
Flow rate: 0.25 mL/min
Injection volume: 0.1% by mass x 20 µL
Calibration sample: monodisperse polystyrene
Calibration method: polystyrene conversion
Calibration curve approximation formula: cubic formula (hyperbola): Exclusion limit setting time 12 minutes

Examples of a method for producing a linear styrene-based elastomer include a method in which a styrene/conjugated diene block copolymer is synthesized in an inert solvent using a lithium catalyst according to the method described in JP S40-23798B, and then hydrogenates it in an inert solvent in the presence of hydrogenation catalyst according to the method described in JP S42-8704B, JP S43-6636B, JP S59-133203A, and JP S60-79005A.

Linear styrene-based elastomers are also available as commercial products. Examples of linear styrene-based elastomers include "Kraton (registered trademark) G" manufactured by Kraton Polymer Co., Ltd., "Septon (registered trademark)" manufactured by Kuraray Co., Ltd., and "Tuftec (registered trademark)" manufactured by Asahi Kasei Corporation.

### <Silica>

If silica is contained in the thermoplastic elastomer composition in accordance with the invention, it is generally blended in the form of silica particles into the composition. Silica comprised by the thermoplastic elastomer composition of the present invention may be provided by only one type of silica, or may contain two or more types thereof.

Silica for use in the thermoplastic elastomer composition in accordance with the invention is typically synthetic silica. With regard to its structure, the silica is preferably amorphous silica, such that synthetic amorphous silica is particularly preferred. As examples of suitable types of silica, which may be used singly or in combination, reference can be made to fumed silica, precipitated silica, and silica gel, among which fumed silica and precipitated silica are preferred. Silica provided in the form of a powder can be conveniently blended into the thermoplastic elastomer composition in accordance with the invention. A silica powder, such as fumed or precipitated silica, can be characterized by its surface area (which can be determined, e.g., by a BET method using nitrogen adsorption). Preferably, the silica has a specific surface area of 25 to 800 g/m², more preferably of 100 to 700 g/m². As regards the particle size of the powder particles, it is preferred that the particles have a size of 50 µm or less, more preferably of 30 µm or less, still more preferably of 25 µm or less. The particle size can be indicated, e.g., as the particle median diameter (D50) in a volume distribution of the powder particles. It can be measured, e.g., by laser diffraction. The lower limit of the particle is not critical, and, for example, silica powders with a particle size of 100 nm or more are conveniently available for use in the thermoplastic elastomer composition in accordance with the invention. Silica can be obtained as a commercial product. For example, it is manufactured by Evonik and Tosoh Silica Corporation.

### <Amide lubricant>

If an amide lubricant is contained in the thermoplastic elastomer composition in accordance with the invention, the amide lubricant is generally blended into the compositions. An amide lubricant comprised by the thermoplastic elastomer composition of the present invention may be provided by only one type of amide lubricant, or may contain two or more types thereof.

Suitable amide lubricants are, e.g., fatty acid amides of saturated or unsaturated fatty acids, or diamides formed from an alkylene diamine and saturated or unsaturated fatty acids. As exemplary fatty acid amides, reference may be made to compounds of the formula R¹-C(O)NH₂, wherein R¹ represents a linear alkyl group containing 15 to 23, preferably 17 to 21, carbon atoms, or a linear alkenyl group containing one or two, preferably one, double bond and 15 to 23, preferably 17 to 21, carbon atoms. As exemplary diamides, reference may be made to compounds of the formula R¹-C(O)NH-R²-NH-C(O)-R³, wherein R¹ and R³ each represents, independently, a linear alkyl group containing 15 to 23, preferably 17 to 21, carbon atoms, or a linear alkenyl group containing one or two, preferably one, double bond and 15 to 23, preferably 17 to 21, carbon atoms. It is preferred that R¹ and R³ are the same. R² is a linear alkanediyl group containing 1 to 6 carbon atoms, and preferably represents the group -CH₂- or -CH₂-CH₂-.

Specific examples of amide lubricants which may be used in the thermoplastic elastomer composition of the present invention include stearamide, oleamide, erucamide, methylenebis stearamide, and ethylenebis stearamide, which may be used singly or in combination. In the present invention, it is preferable to use an amide lubricant with a refractive index from 1.450 to 1.550 in view of ensuring transparency by using additives with a refractive index which is close to that of a propylene copolymer. Amide lubricants are commercially available. Examples thereof may include FINAWAX O (manufactured by FINE ORGANIC INDUSTRIES), Optislip OR (manufactured by Cargill), CRODAMIDE OR, CRODAMIDE ER-BE-(HU), CRODAMIDE SR, and CRODAMIDE VRX (all manufactured by CRODA EUROPE). In particular, from the perspective of mold releasability after molding, among amide lubricants, an oleamide type of amide lubricants, such as FINAWAX O (made by FINE ORGANIC INDUSTRIES), Optislip OR (made by Cargill), CRODAMIDE SR and CRODAMIDE VRX (made by CRODA EUROPE), is preferable. In the present application, the refractive index is a value determined in accordance with JIS K 0062 (1992).

### <Crystal Nucleating Agent>

The thermoplastic elastomer composition of the present invention may contain a crystal nucleating agent. As the crystal nucleating agent, a diacetal crystal nucleating agent is preferable. By mixing a diacetal-based crystal nucleating agent, crystallization of the propylene-based random copolymer is promoted, and it is expected that light transmittance is improved.

Known diacetal crystal nucleating agents can be used, such as Gelol (registered trademark) D, Gelol (registered trademark) MD and Gelol (registered trademark) DXR manufactured by Shin Nippon Rika Co., Ltd., and Mirad 3988, Mirad NX8000, Mirad NX8000J, Mirad NX8000K, and Mirad NX8000ECO manufactured by Milliken (USA), NX ULTRACLEAR SE 265B which is a master batch form, manufactured by Milliken Europe and SIPAXNA-2 manufactured by GCHTECHNOLORY (China).

Only one of these may be used, or two or more of these may be used.

### <Blending Ratio>

The total content of the propylene-based random copolymer and the linear styrene-based elastomer in the thermoplastic elastomer composition of the present invention is more than 85% by mass, preferably 88% by mass or more, more preferably 90% by mass or more, still more preferably 95% by mass or more with respect to 100% by mass of the thermoplastic elastomer composition from the viewpoint of the effects of excellent low-temperature impact resistance, high-temperature strength, and light transmittance.

In the thermoplastic elastomer composition of the present invention, the content ratio of the linear styrene-based elastomer is 45 parts by mass or more and 250 parts by mass or less with respect to 100 parts by mass of the propylene random copolymer. The lower limit of the content of the linear styrene-based elastomer with respect to 100 parts by mass of the propylene-based random copolymer is more preferably 60 parts by mass or more, still more preferably 70 parts by mass or more, and particularly preferably 80 parts by mass or more from the viewpoint of low-temperature impact resistance and light transmission. From the viewpoint of high-temperature strength, the upper limit of the content of the linear styrene-based elastomer with respect to 100 parts by mass of the propylene-based random copolymer is more preferably 200 parts by mass or less, still more preferably 170 parts by mass or less, particularly preferably 160 parts by mass or less, and especially preferably 150 parts by mass or less.

When the thermoplastic elastomer composition of the present invention contains silica, it includes 0.00090 parts by mass or more and 0.90 parts by mass or less of the silica with respect to 100 parts by mass of the total content of the propylene-based random copolymer and the linear styrene-based elastomer. By blending the silica so as to satisfy the above relationship, it is possible to obtain a thermoplastic elastomer composition which is excellent in discoloration resistance and whose change in melt fluidity during kneading over time is small. The lower limit of the content of the silica with respect to 100 parts by mass of the total content of the propylene-based random copolymer and the linear styrene-based elastomer is preferably 0.0010 parts by mass. The upper limit of the content of the silica with respect to 100 parts by mass of the total content of the propylene-based random copolymer and the linear styrene-based elastomer is preferably 0.70 parts by mass, more preferably 0.20 parts by mass, still more preferably 0.15 parts by mass and particularly preferably 0.0040 parts by mass.

When the thermoplastic elastomer composition of the present invention contains an amide lubricant, it includes 0.0050 parts by mass or more and 0.60 parts by mass or less of the amide lubricant with respect to 100 parts by mass of the total content of the propylene-based random copolymer and the linear styrene-based elastomer. By blending the amide lubricant so as to satisfy the above relationship, it is possible to obtain a thermoplastic elastomer composition which is excellent in light transmittance and mold releasability. The lower limit of the content of the amide lubricant with respect to 100 parts by mass of the total content of the propylene-based random copolymer and the linear styrene-based elastomer is preferably 0.040 parts by mass. The upper limit of the content of the amide lubricant with respect to 100 parts by mass of the total content of the propylene-based random copolymer and the linear styrene-based elastomer is preferably 0.40 parts by mass.

When the thermoplastic elastomer composition of the present invention contains a crystal nucleating agent, preferably a diacetal-based crystal nucleating agent, the content of the crystal nucleating agent in the thermoplastic elastomer composition of the present invention is preferably 0.05 parts by mass or more and 5.0 parts by mass or less, more preferably 0.05 parts by mass or more and 1.0 parts by mass or less relative to 100 parts by mass of the total of the propylene-based random copolymer and the linear styrene-based elastomer.

### <Other Components>

The thermoplastic elastomer composition of the present invention may include other optional components for various purposes within a range that does not significantly impair the effects of the present invention, in addition to the propylene-based random copolymer, linear styrene-based elastomer, silica and/or amide lubricant, and crystal nucleating agent. Examples thereof include additives as mentioned below, organic fillers, resins other than the propylene-based random copolymers, and the linear styrene-based elastomer (hereinafter referred to as "other resins").

Examples of the additives include a colorant, an antioxidant, a heat stabilizer, a light stabilizer, an ultraviolet absorber, a neutralizer, an anti-fogging agent, an antiblocking agent, a slip agent, a flame retardant, a dispersant, an antistatic agent, a conductivity-imparting agent, a metal deactivator, a molecular weight modifier, an antibacterial agent, and a fluorescent brightening agent. These additives can be blended in the range of usually 0.01 parts by mass or more and 2 parts by mass or less of each additive with respect to a total of 100 parts by mass of the propylene-based random copolymer and the linear styrene-based elastomer.

Examples of the above other resins that may be contained in the thermoplastic elastomer composition of the present invention include low-density polyethylene, polyester elastomers, urethane elastomers, polyester resins, polyamide resins, polyurethane resins, styrene resins, polycarbonate resins, polyvinyl chloride resins, and elastomers other than the above (excluding those corresponding to the linear styrene-based elastomers). Only one type or two or more types of the other resins listed above can be blended.

### <Method for Producing Thermoplastic Elastomer Composition>

The thermoplastic elastomer composition of the present invention can be manufactured by kneading the propylene-based random copolymer and linear styrene-based elastomer, and silica and/or an amide lubricant, and optionally other components according to a conventional method using a conventional extruder, such as a Banbury mixer, a roll, a Brabender plastograph, or a kneader Brabender. Among these manufacturing methods, it is preferable to use an extruder, particularly a twin-screw extruder.

When the thermoplastic elastomer composition of the present invention is manufactured by kneading, e.g. with an extruder, it is usually melt-kneaded while being heated to 155°C or higher and 240°C or lower, preferably 180°C or higher and 220°C or lower.

### <Physical Properties>

The thermoplastic elastomer composition of the present invention contains the propylene-based random copolymer and the linear styrene-based elastomer, and silica and/or an amide lubricant, and, optionally a crystal nucleating agent and thus is excellent in light transmittance and/or discoloration resistance and suppression of change in melt fluidity during kneading over time. As will be understood, reference to the composition containing silica and/or an amide lubricant indicates that the following options are encompassed: the composition contains the silica, but no amide lubricant, the composition contains the amide lubricant, but no silica, or the composition contains silica and amide lubricant.

The thermoplastic elastomer composition of the present invention is preferably used for airbag housing covers. In the present invention, the "airbag housing cover" means a container in general for storing an airbag. For example, it means a container in which an airbag is housed, the container having an opening when the airbag deploys, or the entire container integrated with this opening.

In such applications, the thermoplastic elastomer composition of the present invention preferably has the following physical properties.

### (MFR)

In the present invention, the melt flow rate (MFR) at a temperature of 230°C and a measurement load of 21.18N according to JIS K7210 (1999) is used as an index of injection moldability of the thermoplastic elastomer composition. The thermoplastic elastomer composition of the present invention has a melt flow rate of 1.0 g/10 min or more and 50 g/10 min or less in order to have excellent injection moldability. When the MFR of the thermoplastic elastomer composition for airbags is 1.0 g/10 min or more, the melt fluidity tends to be good, and when it is 50 g/10 min or less, burrs during molding can be easily suppressed. From the viewpoint of melt fluidity, the MFR of the thermoplastic elastomer composition for airbags is more preferably 2.0 g/10 min or more, still more preferably 2.5 g/10 min or more. On the other hand, from the viewpoint of suppressing burrs during injection molding, the MFR of the thermoplastic elastomer composition is more preferably 40 g/10 min or less, still more preferably 20 g/10 min or less, particularly preferably 17 g/10 min or less, and especially preferably 15 g/10 min or less.

### (Change in MFR over time)

In the present invention, raw materials of the thermoplastic elastomer composition are melt-kneaded. As mentioned above, MFR is measured by using pellets obtained 5 minutes after the start of melt-kneading and pellets obtained 45 minutes or one and a half hour after the start of melt-kneading. Comparison of these MFR is used as an index of stability of melt fluidity. When the change in MFR over time is small, melt fluidity is stable. As a result, it enables a production of an airbag housing cover wherein change in properties of the airbag housing covers is suppressed. The difference between MFR of pellets obtained 5 minutes after the start of melt-kneading (initial MFR) and MFR of pellets obtained 45 minutes after or one and a half hour after the start of melt-kneading is preferably 1.0 or less, more preferably less than 0.7, still more preferably less than 0.4, particularly preferably 0.3 or less, and especially particularly preferably 0.1 or less.

### (Total Light Transmittance)

From the viewpoint of light transmission, the total light transmittance measured based on JIS K7136-1 for a sheet-form test piece having a thickness of 2 mm obtained by injection molding the thermoplastic elastomer composition of the present invention under the conditions of a resin temperature of 200°C and a mold temperature of 40°C is preferably 81% or more, more preferably 82% or more. With such a numerical range, when used as an airbag housing cover, good appearance quality is provided, i.e., the light transmission is good and the lighting of the switch becomes easy to see.

### (Stability of Color Difference)

Raw materials of the thermoplastic elastomer composition of the present invention are melt-kneaded. Injection-molded test sheets having a thickness of 2 mm, a width of 120 mm, and a length of 80 mm are prepared by injection molding of the pellets of the thermoplastic elastomer composition obtained 5 minutes and 45 minutes after the start of melt-kneading. Color difference of the injection-molded test sheets is measured by using Ci7600 Sphere Tisch-Spektralphotometer (device shape: d/8° spherical) manufactured by X-rite under the conditions of a standard light source being D65 and a viewing angle of 10°.

ΔE of an injection-molded sheet prepared from pellets obtained 5 minutes after the start of melt-kneading and that from pellets obtained 45 minutes after the start of melt-kneading are compared and used as an index of discoloration resistance. When change in ΔE of the thermoplastic elastomer composition is small, an airbag housing cover having good appearance wherein discoloration is suppressed and no yellowing occur, can be obtained. The difference in ΔE between the injection-molded sheet prepared from pellets obtained 5 minutes after the start of melt-kneading (initial ΔE) and that prepared from pellets obtained 45 minutes after the start of melt-kneading is preferably 0.8 or less, 0.5 or less, more preferably less than 0.4, still particularly preferably less than 0.3.

### <Molded Article such as Airbag Housing Cover>

Using the thermoplastic elastomer composition of the present invention, a molded article such as an airbag housing cover can be formed in general, using an ordinary injection molding method, or, if necessary, using one of various molding methods such as gas injection molding, injection compression molding, short shot foam molding . In particular, it is preferable that the thermoplastic elastomer composition of the present invention is injection-molded into a molded article such as an airbag housing cover. Molding conditions for injection molding are as follows.

The molding temperature for injection molding the thermoplastic elastomer composition is usually 150°C to 300°C, and preferably 180°C to 280°C. The injection pressure is usually 5 MPa to 100 MPa, and preferably 10 MPa to 80 MPa. The mold temperature is usually 0°C to 80°C, and preferably 20°C to 60°C.

### <Uses>

The thermoplastic elastomer composition of the present invention is excellent in light transmittance and/or discoloration resistance, and is suitably used as a molding material for airbag housing covers. In particular, since appearance quality of an airbag housing cover is improved, the degree of freedom in design of an airbag housing cover is increased. For example, due to its excellent light transmittance, the airbag housing cover of the present invention is suitable as an airbag housing cover arranged at a visible position such as a touch panel display.

Furthermore, due to its excellent discoloration resistance the airbag housing cover of the present invention does not give users any impressions of deterioration over time. Furthermore, since selection of brighter colors may be allowed, the degree of freedom in design of an airbag housing cover is increased. Even more, by using the thermoplastic elastomer composition whose change in melt fluidity during kneading over time is small, an airbag housing cover which is excellent in appearance quality can be stably provided.

### EXAMPLES

Now, specific embodiments of the present invention will be described in further detail with reference to examples. The present invention is not limited to the following examples as long as the present invention is within the gist thereof.

The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

### <Raw Materials>

### [Propylene-based Random Copolymer]

(A-1): Moplen (registered trademark) PP RP348R manufactured by Lyondell Basell Industries Holding B.V. Propylene/ethylene random copolymer

MFR (JIS K7210 (1999)): 25 g/10 min (measurement conditions: 230°C, a load of 21.18 N (2.16 kgf))

### Propylene unit content: 96% by mass

### [Linear Styrene-Based Elastomer]

(B-1): Kraton (registered trademark) G1652MU manufactured by Kraton Polymer Co., Ltd., Hydrogenated product of styrene/butadiene block copolymer (styrene/ethylene/butylene/styrene copolymer (SEBS))

### Weight average molecular weight (Mw): 70,000

### Styrene unit content: 30% by mass

### Glass transition temperature: -55°C

(B-2): Kraton (registered trademark) G1657 manufactured by Kraton Polymer Co., Ltd., Hydrogenated product of styrene/butadiene block copolymer (styrene/ethylene/butylene/styrene copolymer (SEBS))

### Weight average molecular weight (Mw): 110,000

### Styrene unit content: 13% by mass

### Glass transition temperature: -55°C

### [Lubricant or Silica]

(C-1): Amide lubricant (Oleic acid amide FINAWAX O manufactured by FINE ORGANIC INDUSTRIES)

(C-2): Silicone oil (KF96-100CS manufactured by Shin-Etsu Chemical Co., Ltd.)

(C-3): Synthetic silica (Precipitated silica SIPERNAT50S manufactured by EVONIK)

### [Crystal Nucleating Agent]

(D-1): NX (registered trademark) ULTRACLEAR SE 265B which is a master batch form, manufactured by Milliken Europe

### <Evaluation Method>

### 1) Melt flow rate (MFR)

It was measured according to JIS K7210 (1999) under the conditions of a temperature of 230°C and a load of 21.18N.

Sampling was made 5 minutes after the start of melt-kneading and 45 minutes or one and a half hour after the start of melt-kneading and each MFR thereof was measured. Injection moldability was assessed in view of a MFR value of pellets obtained 5 minutes after the start of melt-kneading. Furthermore, when change in MFR over time is smaller, it is assessed that melt fluidity is more stable.

In the following evaluations 2)and 3), injection-molded test sheets obtained by injection molding of the pellets of the thermoplastic elastomer composition obtained in each example with an electric injection molding machine (manufactured by FANUC, "OBOSHOT α-S100iA") at an injection pressure of 50 MPa, a cylinder setting temperature of 190°C (a resin temperature of 200°C) and a mold temperature of 40°C were used for each test.

### 2) Total light transmittance

The total light transmittance was measured with NDH8000 (manufactured by Nippon Denshoku Industries Co. Ltd.) according to JIS K7136-1 for injection-molded sheets with a thickness of 2 mm, a width of 120 mm, and a length of 80 mm, which were prepared from the pellets of the thermoplastic elastomer composition obtained 5 minutes and from those obtained 90 minutes after the start of melt-kneading, respectively. It was evaluated that the larger the total light transmittance value, the better the light transmittance.

### 3) Change in ΔE

Injection-molded test sheets having a thickness of 2 mm, a width of 120 mm, and a length of 80 mm were prepared from the pellets of the thermoplastic elastomer composition obtained 5 minutes and from those obtained 45 minutes after the start of melt-kneading. Color difference of the injection-molded test sheets is measured by using Ci7600 Sphere Tisch-Spektralphotometer (device shape: d/8° spherical) manufactured by X-rite under the conditions of a standard light source being D65 and a viewing angle of 10°.

ΔE of an injection-molded sheet prepared from pellets obtained 5 minutes after the start of melt-kneading, which is a standard, is compared with ΔE of an injection-molded sheet prepared from pellets obtained 45 minutes after the start of melt-kneading. When difference in ΔE is small, it is assessed that discoloration resistance is excellent.

### <Examples/Comparative Examples>

### [Experiment A]

### (Example 1)

As shown in Table-1, 40 parts by mass of (A-1), 30 parts by mass of (B-1), 30 parts by mass of (B-2), and 0.05 parts by mass of an amide lubricant (C-1) and 0.4 parts by mass of crystal nucleating agent (D-1) for total of 100 parts by mass of (A-1), (B-1) and (B-2) were blended for 1 minute in a Henschel mixer. The blended material was charged into a co-directional twin-screw extruder at a rate of 35 kg/h, and was melt-kneaded to produce pellets of a thermoplastic elastomer composition wherein the temperature of the cylinder block under the hopper was set at 100°C, from there, while the temperature of each cylinder was set to 150°C, 190°C, and 200°C so that the temperature gradually increases toward the die at the output and the temperature of the rest of the cylinders was set at 200°C. The temperature of the die was set at 210°C.

The evaluation 2) above was performed on the obtained pellets of the thermoplastic elastomer composition. The evaluation results are shown in Table-1. An injection molded test sheet was produced without any problems. There was no contamination of the mold.

### (Comparative Example 1)

Pellets of the thermoplastic elastomer composition were obtained in the same manner as in Example 1 except that a silicon lubricant was used instead of an amide lubricant. The amount of the silicon lubricant was adapted to achieve the same degree of lubrification as it was achieved for the amide lubricant in Example 1.

The measurement of the total light transmittance was performed on the obtained pellets of the thermoplastic elastomer composition. These evaluation results are shown in Table-1.

An injection molded test sheet was produced without any problems. There was no contamination of the mold.

**[Table 1]**

| | | | | **Example 1** | | **Comparative Example 1** | |
|---|---|---|---|---|---|---|---|
| raw materials | Propylene-based random copolymer | A-1 | parts by mass | 40 | | 40 | |
| | styrene-based elastomer | B-1 | parts by mass | 30 | | 30 | |
| | | B-2 | parts by mass | 30 | | 30 | |
| | amide lubricant | C-1 | parts by mass | 0,05 | | | |
| | silicone lubricant | C-2 | parts by mass | | | 0,2 | |
| | crystal nucleating agent | D-1 | parts by mass | 0,4 | | 0,4 | |
| kneading time | | | min. | 5 | 90 | 5 | 90 |
| total light transmission | | | % | 83 | 86 | 78 | 77 |

### [Discussion of Evaluation results]

Example 1 showed higher total light transmission compared to Comparative Example 1. It was shown that, by using an amide lubricant instead of silicone lubricant, a high level of light transmittance was provided.

### [Experiment B]

### (Example 2)

As shown in Table-2, 40 parts by mass of (A-1), 30 parts by mass of (B-1), 30 parts by mass of (B-2), and 0.05 parts by mass of an amide lubricant (C-1), 0.001 parts by mass of silica (C-3) and 0.4 parts by mass of crystal nucleating agent (D-1) for total of 100 parts by mass of (A-1), (B-1) and (B-2) were blended for 1 minute in a Henschel mixer. The blended material was charged into a co-directional twin-screw extruder at a rate of 35 kg/h, and was melt-kneaded to produce pellets of a thermoplastic elastomer composition wherein the temperature of the cylinder block under the hopper was set at 100°C, from there, while the temperature of each cylinder was set to 150°C, 190°C, and 200°C so that the temperature gradually increases toward the die at the output and the temperature of the rest of the cylinders was set at 200°C. The temperature of the die was set at 210°C.

The evaluation 1) above was performed on the obtained pellets of the thermoplastic elastomer composition as well as the pellets obtained in Example 1. These evaluation results are shown in Table-2.

**[Table 2]**

| | | | | **Example 1** | | **Example 2** | |
|---|---|---|---|---|---|---|---|
| raw materials | propylene-based random copolymer | A-1 | parts by mass | 40 | | 40 | |
| | styrene-based elastomer | B-1 | parts by mass | 30 | | 30 | |
| | | B-2 | parts by mass | 30 | | 30 | |
| | amide lubricant | C-1 | parts by mass | 0,05 | | 0,05 | |
| | synthetic silica | C-3 | parts by mass | | | 0,001 | |
| | crystal nucleating agent | D-1 | parts by mass | 0,4 | | 0,4 | |
| kneading time | | | min. | 5 | 90 | 5 | 90 |
| test results | MFR | | g/10 min. | 7,5 | 6,5 | 10,1 | 9,8 |
| | difference from initial MFR | | g/10 min. | - | -1,0 | - | -0,3 |

### [Discussion of Evaluation Results]

In Example 2, MFR was less changed even one and a half hour after the start of melt-kneading. It was shown that addition of silica contributed to stabilize melt fluidity.

### [Experiment C]

### (Example 3)

As shown in Table-3, 40 parts by mass of (A-1), 30 parts by mass of (B-1), 30 parts by mass of (B-2), and 0.05 parts by mass of an amide lubricant (C-1), 0.001 parts by mass of silica (C-3) and 0.4 parts by mass of crystal nucleating agent (D-1) for total of 100 parts by mass of (A-1), (B-1) and (B-2) were blended for 1 minute in a Henschel mixer. 0.15 parts by mass of antioxidant (product name Irgastab (registered trademark) FS301FF manufactured by BASF Japan), 0.2 parts by mass of light stabilizer (HALS (SABOSTAB (registered trademark) UV119 manufactured by SONGWON)), 0.1 parts by mass of ultraviolet absorber (Tinuvin (registered trademark) 326 manufactured by BASF Japan) were also added thereto. The blended material was charged into a brabender apparatus with a conical twin-screw (outer diameter: 20-31mm, length: 350mm, manufactured by Anton Paar, Model: Brabender Meta Station 4) and the temperature was raised in the range of 160°C or higher and 210°C or lower to perform melt-kneading to produce pellets of a thermoplastic elastomer composition.

Sampling was made 5 minutes after the start of melt-kneading and 45 minutes after the start of melt-kneading. The evaluations 1) and 3) above were performed on the obtained pellets of the thermoplastic elastomer composition. These evaluation results are shown in Table-3.

### (Examples 4 to 7)

Pellets of the thermoplastic elastomer composition were obtained in the same manner as in Example 3 except that the amounts of silica or an amide lubricant were changed as shown in Table 3.

The evaluations 1) and 3) above were performed on the obtained pellets of the thermoplastic elastomer composition. These evaluation results are shown in Table-3.

**[Table 3]**

| | | | | **Example 3** | | **Example 4** | | **Example 5** | | **Example 6** | | **Example 7** | |
|---|---|---|---|---|---|---|---|---|---|---|---|---|---|
| raw materials | propylene-based random copolymer | A-1 | parts by mass | 40 | | 40 | | 40 | | 40 | | 40 | |
| | styrene-based elastomer | B-1 | parts by mass | 30 | | 30 | | 30 | | 30 | | 30 | |
| | | B-2 | parts by mass | 30 | | 30 | | 30 | | 30 | | 30 | |
| | amide lubricant | C-1 | parts by mass | 0,05 | | 0,05 | | 0,05 | | 0,05 | | 0.80 | |
| | synthetic silica | C-3 | parts by mass | 0,001 | | 0,01 | | 0,1 | | 1,0 | | 0.001 | |
| | crystal nucleating agent | D-1 | parts by mass | 0,4 | | 0,4 | | 0,4 | | 0,4 | | 0,4 | |
| kneading time | | | min. | 5 | 45 | 5 | 45 | 5 | 45 | 5 | 45 | 5 | 45 |
| test results | MFR | | g/10 min. | 9,5 | 9,2 | 9,3 | 9,4 | 9.0 | 9,1 | 8,5 | 9,0 | 10.1 | 10.0 |
| | difference from initial MFR | | g/10 min. | - | -0,3 | - | 0,1 | - | 0.1 | - | 0,5 | - | 0.1 |
| | difference from initial ΔE | | | - | 0,23 | - | 0,36 | - | 0,23 | - | 0,79 | - | 0,37 |

### [Discussion of Evaluation Results]

Change in MFR over time of the thermoplastic elastomer composition obtained in Examples 3 to 7 was also small and therefore the effect derived from addition of silica was shown. Furthermore, it was shown that thermoplastic elastomer compositions whose change in ΔE over time was also small were obtained.

Although the present invention has been described in detail with reference to particular embodiments, it will be apparent to those skilled in the art that various changes may be made thereto without departing from the spirit and scope of the present invention.

## Claims

1. A thermoplastic elastomer composition comprising a propylene-based random copolymer, a linear styrene-based elastomer having a styrene unit content of 20% by mass or more and 35% by mass or less and a glass transition temperature in the range of -65°C or higher and -45°C or lower, and silica, wherein a total content of the propylene-based random copolymer and the linear styrene-based elastomer is more than 85% by mass with respect to 100% by mass of the thermoplastic elastomer composition, and the content of the linear styrene-based elastomer relative to 100 parts by mass of the propylene-based random copolymer is 45 parts by mass or more and 250 parts by mass or less, wherein the thermoplastic elastomer composition has a melt flow rate of 1.0g/10min or more and 50g/10min or less at a temperature of 230°C and a measurement load of 21.18N according to JIS K7210 (1999), and wherein the content of the silica relative to 100 parts by mass of the total content of the propylene-based random copolymer and the linear styrene-based elastomer is 0.00090 parts by mass or more and 0.90 parts by mass or less.

2. The thermoplastic elastomer composition according to claim 1, wherein the silica is at least one selected from the group consisting of fumed silica and precipitated silica.

3. The thermoplastic elastomer composition according to claim 1 or 2, wherein the thermoplastic elastomer composition further comprises an amide lubricant wherein the content of the amide lubricant relative to 100 parts by mass of the total content of the propylene-based random copolymer and the linear styrene-based elastomer is 0.0050 parts by mass or more and 0.60 parts by mass or less.

4. A thermoplastic elastomer composition comprising a propylene-based random copolymer, a linear styrene-based elastomer having a styrene unit content of 20% by mass or more and 35% by mass or less and a glass transition temperature in the range of -65°C or higher and -45°C or lower, and an amide lubricant wherein a total content of the propylene-based random copolymer and the linear styrene-based elastomer is more than 85% by mass with respect to 100% by mass of the thermoplastic elastomer composition, and the content of the linear styrene-based elastomer relative to 100 parts by mass of the propylene-based random copolymer is 45 parts by mass or more and 250 parts by mass or less, wherein the thermoplastic elastomer composition has a melt flow rate of 1.0g/10min or more and 50g/10min or less at a temperature of 230°C and a measurement load of 21.18N according to JIS K7210 (1999) and wherein the content of the amide lubricant relative to 100 parts by mass of the total content of the propylene-based random copolymer and the linear styrene-based elastomer is 0.0050 parts by mass or more and 0.60 parts by mass or less.

5. The thermoplastic elastomer composition according to any one of claims 1 to 4, wherein the linear styrene-based elastomer has a styrene unit content of 20% by mass or more and 25% by mass or less.

6. The thermoplastic elastomer composition according to any one of claims 1 to 5, wherein the linear styrene-based elastomer consists of a hydrogenated product of a styrene/conjugated diene block copolymer (B-1) having a styrene unit content of 25% by mass or more and 35% by mass or less, and a hydrogenated product of a styrene/conjugated diene block copolymer (B-2) having a styrene unit content of 10% by mass or more and 15% by mass or less.

7. An airbag housing cover formed by the thermoplastic elastomer composition according to any one of claims 1 to 6.

8. A method for manufacturing the thermoplastic elastomer composition according to any one of claims 1 to 6, comprising a step of melt-kneading the propylene-based random copolymer, the linear styrene-based elastomer, the silica and/or the amide lubricant at a temperature of 155°C or higher and 240°C or lower.

9. A method for manufacturing the airbag housing cover according to claim 7, comprising a step of injection molding the thermoplastic elastomer composition.
